(19) Europäisches Patentamt
European Patent Office
Office européen des brevets

(11) EP 2 028 444 B1

(12) **EUROPEAN PATENT SPECIFICATION**

(45) Date of publication and mention of the grant of the patent:
**07.08.2019 Bulletin 2019/32**

(51) Int Cl.:
***G01C 21/34*** *(2006.01)* ***G08G 1/01*** *(2006.01)*
***G08G 1/0968*** *(2006.01)*

(21) Application number: **08011290.7**

(22) Date of filing: **20.06.2008**

(54) **Route searching method and route searching system**

Routensuchverfahren und Routensuchsystem

Procédé de recherche de route et système de recherche de route

(84) Designated Contracting States:
**DE FR GB**

(30) Priority: **22.06.2007 JP 2007164502**

(43) Date of publication of application:
**25.02.2009 Bulletin 2009/09**

(73) Proprietor: **Hitachi, Ltd.**
**Chiyoda-ku**
**Tokyo 100-8280 (JP)**

(72) Inventors:
- **Kumagai, Masatoshi**
  **Tokyo 100-8280 (JP)**
- **Hiruta, Tomoaki**
  **Tokyo 100-8280 (JP)**
- **Kono, Toshiaki**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A2- 0 803 705**
**JP-A- H1 038 595**
**JP-A- H08 261 773**
**JP-A- 2000 283 776**
**JP-A- 2001 241 959**
**JP-A- 2004 333 377**
**JP-A- 2007 033 057**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 028 444 B1

Printed by Jouve, 75001 PARIS (FR)

## Description

BACKGROUND OF THE INVENTION

1. Field of the Invention

The present invention relates to a center device and an in-vehicle terminal device which search for a route based on probe car data acquired by a vehicle-installed sensor.

2. Description of the Related Art

Conventionally, in order to search for a recommended route at the time of running on a road, data collected by a probe car has been often used. The probe car is provided with an in-vehicle device including various sensors and communication devices, and collects data about vehicle position, running speed, running distance, route information and the like using various sensors (hereinafter, probe car data) so as to transmit the collected probe car data to predetermined traffic information centers. As the probe cars, taxies which are operated by taxi companies are utilized, or private cars of users using traffic information service for private cars have been frequently used.

On the other hand, route search is an essential function of car navigation devices, but frequently the users are not satisfied with and need this function. This unsatisfaction is mainly such that a route presented by a car navigation device does not meet user's preference and experience, and thus it is difficult for the user to drive a car. This problem can be solved by the following manner. As to a link (road section between two intersections) and a route (a sequence of links where a plurality of links is connected) where a probe car runs, since running frequency of the probe car can be obtained from the probe car data accumulated in the traffic information center, a route is searched for so that the searched route includes a route and a link where the running frequency is high. As a result, the route can be presented according to many users' experiences.

In a technique described in Japanese Patent Application Laid-Open No. 2004-333377, a search is again conducted so that the route necessarily includes a link which is within a certain threshold distance from each node (intersection or branch point) of the shortest route for connecting a departure place to a destination and where weighting by the number of running times of a commercial vehicle exceeds a constant value. As a result, route selecting know-how of the driver of a commercial vehicle can be used for searching a route.

In a technique described in Japanese Patent Application Laid-Open No. 2006-300903, routes which are frequently used by drivers who know the place is used as high-frequency route information, routes to destination are set and detours are searched for at the time of traffic jam, so that an optimum road can be automatically set.

In the invention of Japanese Patent Application Laid-Open No. 2004-333377, however, running history of a commercial vehicle to be used as a probe car is divided into link units, and only links within a threshold distance from each node of the shortest route for connecting a departure place to a destination are used for re-searching of the route. For this reason, information which straddles a plurality of links originally included in probe car data is lost. For example, information such that when the commercial vehicle runs on a certain link, its driver then drives his car on a plurality of specified links, which leads to easy driving, is included in continuous probe car data, but that cannot be digitized per link. For this reason, such information disappears due to the division of the probe car data into link units, and thus only information about running frequency per link remains. As a result, an obtained route is locally optimized for individual links from a viewpoint of high running frequency, but from a viewpoint of the whole route from departure place to destination, continuity of this route is not taken into consideration. It is difficult to achieve entire optimization.

In the invention of Japanese Patent Application Laid-Open No. 2006-300903, information about running frequency is treated per route where a plurality of links are connected, but information about routes for directly connecting departure place to destination is not always present in the past. On the other hand, a method for piecing together fragmentary route information so as to search for an entire route for connecting a departure place to a destination is not shown. For this reason, an object such that a user is led from the departure place to the destination by using the information about the running frequency of a probe car is not achieved.

Japanese Patent Laid-Open No. 2007-033057 describes that a route search processing part searches for an optimum route on the basis of road network data and traffic amount data. A branch node is extracted from the optimum route according to an overlapping state of each optimum route and a plurality of paths is extracted between the branch nodes. A candidate route is prepared as the route optimum route by combining the paths.

In Japanese Patent Laid-Open No. 10038595, a method is disclosed which may enable a driver to search an optimum path capable of coping with a change of restriction condition like congestion of a road by repeating selection, exchange and substitution processes to a plurality of paths passing a plurality of intersections.

European Patent Application No. EP0803705A2 describes searching a route reflecting user preferences, determined by comparing user preferred road data to fixed road data or by comparing a searched route calculated from user preferred road data to the searched route calculated from CD-ROM data.

## SUMMARY OF THE INVENTION

It is an object of the present invention to provide a route searching method, a route searching system, a center device and an in-vehicle terminal device which can reflect , in an entire route from departure place to destination, such know-how commonly owned by a lot of drivers that when the probe car runs on a certain link, the probe car then runs on a plurality of specified links and thus easy driving is provided, by using mainly running history of a probe car for each of plural contiguous link sequences, for route searching, and by determining dividing nodes of the link sequence based on the running history of the probe car.

According to the present invention, a route searching system has both an in-vehicle terminal device which is mounted on a vehicle and acquires information from a sensor of the vehicle so as to transmit it as probe car data, and a center device which has a storage means for receiving and accumulating the probe car data transmitted from the in-vehicle terminal device and searches for a route based on the accumulated probe car data, both devices being connected with each other by communication. The in-vehicle terminal device transmits GPS data about a plurality of links or link number data representing link sequences on which the vehicle has run from the information acquired with the sensor, as the probe car data, to the center device. The center device extracts nodes with a lot of branching of vehicles as main branch nodes based on the probe car data received and accumulated from a plurality of vehicles, and divides the probe car data by the main branch nodes so as to record the divided data, as probe segments, in the probe segment DB.

In the route search, the center device generates an initial route for connecting specified departure place to destination, and divides the initial route as a basic route into a plurality of partial routes by the main branch nodes. The center device searches the probe segment DB for probe segments which have the same main branch nodes as the divided partial routes have, as terminal points, and substitutes the searched route information in the probe segment DB for the partial routes of the basic route so as to generate derived routes. The center device evaluates and selects derived routes, and repeats the above process for the selected derived routes as new basic routes so as to output a route having the highest evaluation level as a recommended route.

According to the present invention, it is possible to generate and provide a route which satisfies objective estimate standards such as a route length and necessary time, and in which reflected from a departure place to a destination is such drivers' know-how that when the vehicle runs on a certain link and thereafter the vehicle runs one or a plurality of specified links, thereby providing ease of driving.

## BRIEF DESCRIPTION OF THE DRAWINGS

FIG. 1 is a functional block diagram illustrating a route searching system according to an embodiment of the present invention;

FIG. 2 is a diagram explaining a main branch node detecting method according to the embodiment of the present invention;

FIG. 3 is a diagram explaining probe segments according to the embodiment of the present invention;

FIG. 4 is a flow chart illustrating a main branch node detecting process according to the embodiment of the present invention;

FIG. 5 is a diagram illustrating a repeating process of a route searching method according to the embodiment of the present invention;

FIG. 6 is a diagram illustrating an example of a configuration of a derived route generating section according to the embodiment of the present invention;

FIG. 7 is a flow chart illustrating a route searching process according to the embodiment of the present invention;

FIG. 8 is a flow chart illustrating a probe segment generating process according to the embodiment of the present invention;

FIG. 9 is a flow chart illustrating a derived route generating process according to the embodiment of the present invention;

FIG. 10 is a diagram explaining derived routes according to the embodiment of the present invention;

FIG. 11 is a diagram explaining a partial route chain according to the embodiment of the present invention;

FIG. 12 is a flow chart illustrating a probe segment connecting process according to the embodiment of the present invention; and

FIG. 13 is a diagram explaining derived routes according to the embodiment of the present invention.

DETAILED DESCRIPTION OF THE INVENTION

Embodiments of the present invention are described in detail below with reference to the drawings.

First Embodiment

FIG. 1 is a diagram illustrating an example of a configuration of a functional block of a route searching system according to the first embodiment of the present invention. As shown in FIG. 1, the route searching system is comprised of a center device 122, and an in-vehicle terminal device 121 connected to a vehicle. The center device 122 and the in-vehicle terminal device 121 are connected so as to be communicable with each other by a communication device, not shown, such as mobile phone, Internet or vehicle radio transmission.

The center device 122 includes a batch processing section 123, a real time processing section 124, and a common DB section 125. The batch processing section 123 has a probe database (DB) (hereinafter, probe DB) 104, a main branch node detecting section 105, a main branch node database (hereinafter, main branch node DB) 106, a probe car data dividing section 107, and a probe segment database (hereinafter, probe segment DB) 108. The real time processing section 124 is comprised of functional blocks including an initial route generating section 110, a route dividing section 111, a derived route generating section 112, a route selecting section 113 and the like. The common DB section 125 is comprised of functional blocks including a map database (hereinafter, map DB) 109, a traffic information database (hereinafter, traffic information DB) 115 and the like. The common DB section 125 executes processes based on a user's route searching request. The traffic information recorded in the traffic information DB 115 includes required time, speed and a degree of clog on a link basis, generated from on-road sensor data or accumulated probe car data.

The in-vehicle terminal device 121 has a sensor 101 and a probe car data storage section 102. As the sensor 101, various sensors which are generally mounted to vehicles can be used. Their examples are GPS, vehicle speed sensors and azimuth sensors. In the in-vehicle terminal device 121, the probe car data storage section 102 temporarily stores probe car data generated based on the sensor data output from the sensor 101 therein. The stored probe car data is transmitted to the center device 122 at predetermined timing. Examples of the probe car data are positioning results and positioning time obtained by the GPS sensor, average vehicle speed at predetermined time intervals obtained by the vehicle speed sensor, and traveling direction at each predetermined time interval obtained by the azimuth sensor.

In the center device 122, a probe car data converting section 116 identifies a link sequence of a road on which the probe car, which collects the probe car data, has run, based on the positioning result and the positioning time or the running speed and the running direction of the vehicle of the probe car data received from the in-vehicle terminal device 121. The probe car data converting section 116 converts the link sequence of the road into data including connection nodes between the links so as to record the data in the probe DB 104. Hereinafter, this data is called as probe link sequence data. Discriminable links and node identification numbers are uniquely allocated to the road links and the nodes, respectively.

The main branch node detecting section 105 detects a main branch node from the nodes as end points of the road links registered in a map data using the map data recorded in the map DB 109 and probe link sequence data recorded in the probe DB 104 according to a main branch node detecting method, described later, so as to record the main branch node in the main branch node DB 106. The probe car data dividing section 107 divides the probe link sequence data by the main branch nodes according to a probe car data dividing method, described later, so as to create probe segments based on the probe link sequence data recorded in the probe DB 104 and the main branch node data recorded in the main branch node DB 106. The individual probe segments are recorded in the probe segment DB 108. The process in the batch processing section 123 is executed at periodic timing such as once a day or non-regular timing such as time point at which a certain amount of the probe car data is accumulated.

When a user of the in-vehicle terminal device, an internet terminal device, a mobile phone, a terminal device, a dispatch control system terminal device, or the like requests route searching (hereinafter, the user who requests route searching using these terminal devices is described simply as the user) and presents information about departure place and destination, the initial route generating section 110 then generates an initial route for connecting the departure place and the destination according to a conventional route searching method such as a dijkstra method, based on the map data recorded in the map DB 109.

The route dividing section 111 divides the initial route as a basic route into a plurality of partial routes, based on the data about the main branch nodes recorded in the main branch node DB 106 according to a route searching method using probe segments, described later. Similarly to the probe segments, the partial routes are a link sequence divided by the main branch nodes, but unlike the probe segments generated from the probe link sequence data, they are a link sequence obtained by dividing the basic route by the main branch nodes.

Respective partial routes or a plurality of contiguous partial routes which compose a basic route are partial routes to be substituted. The derived route generating section 112 searches the probe segment DB 108 for probe segments whose start and end points are the same main branch nodes as are the start and end points of the partial routes to be substituted, respectively. The derived route generating section 112 substitutes route information about the probe segments for the corresponding partial routes to be substituted so as to generate derived routes. The derive route generating section 112 generates the derived routes on the basis of any one or a plurality of contiguous partial routes. For this reason, it normally generates a plurality of derived routes.

The route selecting section 113 ranks the generated derived routes according to an evaluation function of mathematical formula 1, mentioned later, so as to select one or a plurality of routes in the order of lowering rank. The selected routes are input as new basic routes into the route dividing section 111. Derived routes are further obtained for such derived routes which are ranked in such a manner that as route lengths and necessary times of the derived routes are shorter and the derived routes are used by more people, the derived routes are higher in rank. The further obtained derived routes are ranked, and a derived route which partially includes a probe segments and meets an evaluation condition in the mathematical formula 1, descried later, more satisfactorily is selected. The processes in from the route dividing section 111 through the route selecting section 113 are repeated as the route searching method as described later.

FIG. 2 is a diagram explaining the main branch node detecting process. The main branch node means a node having many branching of a vehicle. For example, when 95 vehicles of 100 vehicles flown from a certain link flow out to a link of the advancing direction, occasion for indicating right or left turn at this node is low in route guidance except for the case where destination is present near this node. On the other hand, 40 of 100 vehicles advance straight, 30 vehicles turn right and 30 vehicles turn left, that node is a node where a lot of branches are generated according to destination in the route guidance. Therefore, a node at which a lot of branches are generated according to destination is detected as a main branch node, and is used in a route searching method, mentioned later.

201 is a pattern diagram of an intersection, and respective links connected to the node are represented by L1, L2, L3 and L4. A branch table 202, a normalization table 203, and a total table 204 are internal data in the main branch node detecting section 105. The branch table 202 is a table showing a flowing-in/flowing-out amount of vehicles among the links in probe link sequence data recorded in the probe DB 104. For example, row L1 shows the flowing-out amount from links L1 to link L2, L3 and L4 for a certain period. Similarly, rows L2, L3 and L4 show the flowing-out amount from links L2, L3 and L4 to other links for the same period. For easy understanding, both up and down traffic lanes are treated as one link, but when numbers are allocated to both up and down traffic lanes, respectively, or to all lanes for such a highway that has a plurality of lanes per one side, respectively, the similar table can be made.

The normalization table 203 is a table where each row of the branch table 202 is divided by a maximum value in its row so as to be normalized. The total table 204 is a table where values in each row of the normalization table 203 are added up. The total table 204 means as follows. For example, in a row L2 in the branch table 202, the flowing-out amount in the link L4 is overwhelmingly larger than the flowing-out amounts in the links L1 and L3. When these flowing-out amounts are normalized by the flowing-out amount in the link L4 as the maximum value, the flowing-out amount in the link L4 becomes 1, and the flowing-out amounts in the links L1 and L3 become very small as shown in the normalization table 203. The total value in the total table 204, therefore, is a value close to 1. On the other hand, as to a row of the link L3 in the branch table 202, the flowing-out amounts in links L2 and L4 are approximately equivalent, and in the normalization table 203, they obtain a value close to 1. The total value in the total table 204 is, therefore, a large value away from 1.

According to a series of computing processes from the branch table 202 to the total table 204, a link where a traffic volume is branched more uniformly into a plurality of links obtains a larger total value in the total table 204. A value obtained by averaging respective totals value in the total table 204, or a maximum value of the total values is regarded as a branching degree as a value expressing a branching degree at the intersection. When this branching degree is compared with a threshold, a main branch node as an intersection with a lot of branching can be detected. When vehicles are concentrated on a specified road link, the branching degree is approximately 1 or more, and when vehicles are dispersed uniformly on respective road links at junction of four streets, the branching degree obtains 3 or less. The threshold is determined experimentally.

The main branch node detecting section 105 records a main branch node detected by the main branching node detecting method in the main branch node DB 106. FIG. 4 is a diagram explaining a processing flow in the main branch node detecting section 105. A process S401 is initialization, and data in both the main branch node DB 106 and a branch table DB are cleared at this process. The branch table DB is a database in which the branch table 202 of respective nodes is temporarily recorded, and it is used in the main branch node detecting section 105. Processes S402 and S403 are executed within a double loop including a loop where the process is executed in units of record in the probe DB 104 and a loop where the process is executed in units of node in the probe link sequence data of the respective records.

In the loop where the process is executed in units of node in the probe link sequence data, the branch table DB is searched for the branch table 202 of each node sequentially starting from the node on the departure side (S402), and an element corresponding to a combination of the flowing-in/out links related with the respective probe link sequence data at the searched nodes is added (S403). When the branch table of the nodes is not present, a new branch table 202 is generated so as to be added to the branch table DB. This loop process is executed in units of record in the probe DB 104, so that the branch tables 202 for respective nodes in the probe link sequence data in all the records recorded in the probe DB 104 are generated.

As the loop process in units of record in the branch table DB, the process S404 to the process S406 are executed in units of node. The process S404 and the process S405 are the process for generating the normalization table 203 from the branch table 202 for each node, and the process for generating the total table 204 from the normalization table 203. When the branching degree obtained in the total table 204 is compared with the threshold and when the branching degree exceeds the threshold, an identification number of that node is registered in the main branch node DB 106 (S406). In such a manner, the main branch nodes can be obtained based on the past probe car data.

FIG. 3 is a diagram explaining a probe car data dividing method in the probe car data dividing section 107. Probe link sequence data 301 is an example of the probe link sequence data recorded in the probe DB 104, and is composed of a link sequence of a route from a vehicle's departure place to destination and connection nodes between the links. The probe segments 302 are segments of the probe link sequence data which are obtained in a manner that the probe link sequence data 301 is divided by the main branch nodes recorded in the main branch node DB 106 in the links included in the route. The probe segment which is close to the departure place of the vehicle is a starting point, and the probe segment which is close to the destination is an end point. The probe segment is a single road link having the main branch nodes at the starting point and the end point or a chain of two or more contiguous road links, which chain has the main branch nodes at the starting point and the end point, and is a subset of the probe link sequence data. The probe segments shown in the drawing are, therefore, link sequences delimited by the two main branch nodes adjoining on the probe link sequence data.

The probe segment table 303 is a management table of the probe segment DB 108, and probe segments where the main branch nodes are the starting point and the end point are recorded in the table 303. In the probe segment table 303, a vertical axis shows the main branch nodes as the starting points, and a horizontal axis shows the main branch nodes as the end points. For example, the probe segment where the main branch node A is the starting point and the main branch node B is the end point comprises the record 1 and the record 2. The records corresponding to the probe segment are stored as data in the probe segment DB 108. The record 1 is composed of links "20", "21", "22", "75" and "78", and nodes "105", "106", "107" and "218" as their connection nodes. On the other hand, the record 2 is the probe segment composed of the link sequence different from that of the record 1, and is composed of links "20", "150", "152", "40", "48", "75" and "78" and nodes "105", "353", "354", "355", "107" and "218" as their connection nodes.

FIG. 8 is a processing flow showing the process in the probe car data dividing section 107. In the loop process for all the records of the probe link sequence data recorded in the probe DB 104, the main branch node on the departure side on the route of the probe link sequence data to be processed to the last main branch node but one on the destination side are processed sequentially in units of main branch node. This means that N1 and N2 are subject to the loop process in this order in FIG. 3. At process S801, the probe link sequence data is divided by both the main branch node to be currently processed and the next main branch node, and the probe segment is generated such that the main branch node to be current processed is the starting point and the next main branch node on the destination side is the end point. The probe segment is called as a new probe segment. At process S802, the starting point and the end point of the generated new probe segment are used as keys, the probe segment table 303 in the probe segment DB 108 is searched for existing probe segment having the same starting point and end point. Hereinafter, the probe segments already recorded in the probe segment table 303 in the probe segment DB 108 are called as existing probe segments. When the existing probe segment having the same starting point and end point is not present in the probe segment table 303, this new probe segment is registered in the probe segment table 303 in the probe segment DB 108 at process S803, and that link sequence data is added as a new record to the probe segment DB 108.

On the other hand, when one or a plurality of existing probe segments having the same starting point and end point is present in the probe segment table 303, an existing record updating flag is initialized at process S804. Thereafter, processes S805 to S807 are executed according to the loop process for the existing probe segments having the same starting point and end point. At process S805, the link sequence composing the new probe segment generated at process S801 is compared with the link sequence composing the existing probe segment to be currently processed among the existing probe segments searched at process S802. When both of them are composed of the same link sequence, the record of the existing probe segment to be currently processed recorded in the probe segment DB 108 is updated at process S806. Concretely, in the probe segment table 303, 1 is added to the number of running vehicles in the record whose link sequence matches with that of the new probe segment in the records of the probe segments registered in a group of the same starting point and end point. The number of running vehicles is a total number of vehicles running on the link sequence composing the record. For example, the number of running vehicles is divided by the time elapsed after the probe segment table 303 is created, so that the frequency of use of the link sequence can be calculated. At process S807, the existing recording updating flag which shows that the existing probe segment is updated is attached. When the existing probe segment to be currently processed and the new probe segment are composed of different link sequences, processes S806 and S807 are skipped so that the loop process is continued.

After the loop process in units of existing probe segment is completed, a determination is made whether the existing record updating flag is attached. When the existing record updating flag is attached, the loop process for the main branch node to be currently processed is ended. On the other hand, when the existing record updating flag is not attached, no existing probe segment composed of the same link sequence as the new probe segment is present in the probe segment DB 108. For this reason, the new probe segment is added to the probe segment DB 108 at process S803. Concretely, the new probe segment is registered as a new record in the probe segment DB 108, the recorded new record is registered in the place in the probe segment table 303, corresponding to the starting point and end point of the new probe segment. The probe car data dividing section 107 divides the probe link sequence data and registers it in the probe segment DB 108 in the above processes.

FIG. 10 is a diagram explaining the route searching method of the present invention. The initial route generating section 110 firstly generates an initial route 1001 according to a conventional method such as a dijkstra method so that a departure place and a destination specified by departure place and destination information from a user are connected. The initial route 1001 is a basic route, and the route dividing section 111 generates a partial route chain 1002 as segments obtained by dividing the basic route by means of the main branching nodes recorded in the main branch node DB 106. The side close to the departure place of the partial routes (S1, S2, S3 and S4) is a starting point, and its side close to destination is an end point. For convenience of the description, the starting point and the end point are the main branch nodes. However, when the starting point and the end point are not the main branch nodes, the first main branch node from the departure place along the initial route is a temporary departure place, and the last main branch node along the initial route is temporary destination. The similar process may be applied to the temporary departure place and the temporary destination.

The derived route generating section 112 searches the probe segment DB 108 for the probe segment having the same starting and end points as those of any one of the partial routes or those of a plurality of contiguous partial routes among the partial route chain 1002 composing the basic route. When the corresponding probe segment is found, route information of the searched probe segment is substituted for the corresponding partial route of the basic route so that a derived route is generated. All derived routes generated in such a manner are a derived route aggregate 1003. For example, a derived route (A) in the derived route aggregate 1003 is a derived route obtained by substituting a probe segment for a single partial route S1, and a derived route (B) is a derived route obtained by substituting a probe segment for a single partial route S2. Similarly, derived routes (C) and (D) are derived routes obtained by substituting probe segments for single partial routes S3 and S4. As an example of the substitution for two contiguous partial routes, a derived route (E) is generated by substituting a probe segment for contiguous partial routes S1 and S2, a derived route (F) is generated by substituting a probe segment for partial routes S2 and S3, and a derived route (G) is generated by substituting a probe segment for partial routes S3 and S4. A derived route (H) is generated by substituting a probe segment for the contiguous three partial routes S1, S2 and S3, and a derived route (I) is generated by substituting a probe segment for the partial routes S2, S3 and S4. A derived route (J) is generated by substituting a probe segment for the contiguous four segments S1, S2, S3 and S4, namely, the whole basic route.

In the initial route 1001, when the departure place and the destination are not the main branch nodes, the substitution for the partial routes S1 and S4 is not carried out. In this case, therefore, probe segments are not substituted for the route from the departure place to the first main branch node along the initial route and the route from the last main branch node to the destination along the initial route. These partial routes are common for all the derived routes generated from one initial route.

The derived route data is, as shown in FIG. 13, expressed by both link numbers of the link sequence composing the derived route and record numbers of the probe segments used for the substitution for the basic route. For example, like the derived routes shown in FIG. 13:

link numbers: 10, 12, 24, 25, 50, 51, 52, 72, 73 and 75
record numbers: 0, 0, 0, 0, 120, 120, 120, 0, 0, 0,

in this case, the link numbers "50", "51" and "52" are link sequences where the probe segment of the record number "120" is substituted for the basic route. A probe segment is not substituted for the links whose corresponding probe segment record number is "0".

In the probe segment DB 108, when a plurality of records are registered for the probe segments as the combination of the same starting and end points as those of a section to be substituted on the basic route, a plurality of derived routes are generated correspondingly to the registered probe segments, respectively. For example, like a derived route (F2) with respect to a derived route (F), a plurality of derived routes are generated by substituting for one partial route. The derived route aggregate 1003 includes the basic route as a derived route (Z).

The route selecting section 113 gives scores as numerical values to the derived route aggregate 1003 by means of evaluation function, and a plurality of derived routes whose ranks are high are selected as a new basic route. The basic route may be selected in such a manner that a predetermined number of derived routes are selected in lowering order with respect to rank or a predetermined number of derived routes are selected for each basic route where the derived routes have been generated. When the number of new derived routes is smaller than a predetermined number, all the new derived routes are selected as the basic route. The evaluation function is a function of a length of the link sequence of each derived route recorded in the map DB 109, necessary time of the link sequence of each derived route recorded in the traffic information DB 115 and the number of running vehicles recorded in the probe segment table 303. As the route length of the derived route to be evaluated is shorter, the necessary time is shorter and the number of running vehicles is larger, the rank becomes higher. Weighting coefficients are given to respective evaluation items, and an evaluation item which is emphasized for ranking is adjusted according to the coefficients.

The evaluation function is expressed by the following formula.

$$F = W1 \times f1\ (\text{route length}) + W2 \times f2\ (\text{necessary time}) + W3 \times f3\ (\text{the number of running vehicles}) \qquad (\text{mathematical formula 1})$$

W1, W2 and W3 represent coefficients of respective items, and f1, f2 and f3 are functions for outputting higher scores as the route length is shorter, the necessary time is shorter and the number of running vehicles is larger, respectively. As the concrete functions, f1 (route length) = (1/route length), f2 (necessary time) = (1/necessary time), and f3 (the number of running vehicles) = (average value of the number of running vehicles on each probe segment composing the derived route) can be used. When W1 is relatively larger than W2, the shortness of the rout length is emphasized, but when W2 is relatively larger than W1, the shortness of the necessary time is emphasized so that the total score F is calculated. The link length and the necessary time are evaluation items which are used in the conventional route searching method such as the dijkstra method, but the number of running vehicles on the probe segments is the evaluation item specific to the present invention. When W3 is set larger than W1 and W2, the score of the route whose number of running vehicles is larger becomes higher. That is to say, W1, W2 and W3 are adjusted, so that the route searching with the link length and the necessary time being emphasized or the route searching with a past record such that many users use the derived route being emphasized can be set.

It is considered that drivers' sense such as popularity of the derived route, easiness of running and easiness of understanding is reflected in the number of running vehicles on derived route. For this reason, the evaluation value is obtained with the number of running vehicles on the derived route being taken into consideration in the mathematical formula 1, and thus the evaluation can be made with the distance of the route, the shortness of the necessary time and drivers' know-how being taken into consideration like a conventional manner.

For example, when the evaluation scores of the derived routes (A), (G) and (H) among the derived route aggregate 1003 are high according to the mathematical formula 1, the route selecting section 113 selects the three derived routes as new basic routes. They are again input into the route dividing section 111, and are divided by their respective main branch nodes, so that new partial route chains can be obtained. Similarly to the process for generating the derived route aggregation 1003 from the partial route chains, the derived route generating section 112 generates new derived routes, and the route selecting section 113 evaluates and selects the derived routes. Thereafter, one substituting process for the basic route by means of the probe segments in the route dividing section 111 through the route selecting section 113 is regarded as one generation, and plural generations of processes are repeated until the end conditions, described later, are satisfied. In this example, as next-generation basic routes, three derived ones whose evaluation points are higher are selected from the current generation derived routes.

The repeating processes in the route dividing section 111 through the route selecting section 113 have the same effect as the effect such that, for example, while genetic algorithm (GA) is partially replacing genes, a generation is repeated and the selecting process is executed so that solid objects having more excellent genes are generated. FIG. 5 is this explanation, and an initial route 501 which is generated by the initial route generating section 110 is a 0-th generation route. The route division by the route dividing section 111 and the derived route generation by the derived route generating section 112 for the 0-th generation route correspond to mutation evolution in GA. The scoring and selection of the derived routes by the route selecting section 113 correspond to selection in GA, and in FIG. 5, the derived routes 502 and 503 are selected as the first generation routes. The first generation routes are subject to the processes in the route dividing section 111, the derived route generating section 112 and the route selecting section 113, so that the derived routes 504, 505, 506 and 507 are selected as the second generation routes. In this example, two next-generation basic routes are selected for each current-generation basic route.

The route searching method of the present invention is different from the route searching method in GA in the following points. In GA, the partial routes are replaced by interchanging (crossing-over) the partial routes between a plurality of routes and adding (mutation evolution) indirect spots randomly. In the route searching method of the present invention, however, since the derived routes are generated by substituting probe segments recorded in the probe segment DB 108 for partial routes, the routes are searched for based on a case example such as the probe car data. As a result, differently from GA where a search is conducted in random solution space, combinations of the probe segments, including the past running know-how are used as the solution space, so that an efficient solution search can be conducted.

The end condition of the repeating processes in the route dividing section 111 through the route selecting section 113 is the case where the upper limit number of the previously specified repeating processes, namely, the upper limit generation number of processes are executed or the case where new derived routes generated by the derived route generating section 112 is lower than the lower limit number of derivations. The upper limit number of generations and the lower limit number of derivations are thresholds which are experimentally determined, but, for example, a one-generation process takes one second, and when all the processes are desired to be finished for 10 seconds, the upper limit number of generations is determined as 10 generations. In another manner, when five recommended routes are eventually presented for users, the lower limit number of derivations can be determined as five.

As shown in FIG. 6, a partial route substituting section 601, a derived route database (hereinafter, derived route DB) 602, a derived route comparing section 603 and a derived route counter 604 are provided to the derived route generating section 112. All the derived routes generated for one initial route in up to a previous generation are recorded in the derived route DB 602. In the derived route comparing section 603, derived route candidates which are the same as the derived routes recorded in the derived route DB 602 in the previous generation are excluded from derived route candidates generated in the partial route substituting section 601, and only the new derived route aggregate is input into the derived route generating section 112 so as to be capable of being evaluated in the route selecting section 113. As a result, useless route generation can be omitted. When the derived route candidates generated by the partial route substituting section 601 are new derived routes, the derived routes are recorded in the derived route DB 602, and the number of the new derived routes is counted so as to be recorded in the new derived route counter 604. At the time when the number of the new derived routes recorded in one generation is less than the threshold, the solution search is regarded as converged, and the repeating processes are ended. One or a plurality of derived routes selected by the route selecting section 113 in that generation is a final recommended route.

FIG. 7 is a processing flow of the route searching method. S701 is an initializing process, and the derived route DB 602 in FIG. 6 is cleared in advance. S702 is generation of an initial route 1001 by means of the initial route generating section 110. S703 is an initializing process in each generation, and the new derived route counter 604 is cleared. S704 is a process in the route dividing section 111, and the partial route chain 1002 is generated by dividing the basic route 1001 in FIG. 10. S705 is a process in the derived route generating section 112, and the derived route aggregate 1003 is generated by substituting the probe segments for the partial route chain 1002 in FIG. 10. S704 and S705 are loop processes in units of basic route, and when the initial route is the basic route, namely, the 0-th generation process in FIG. 5 is only one process, and when a plurality of derived routes selected by the route selecting section 113 at S711 are basic routes, namely the first or later generation processes in FIG. 5 are executed only by number of times equal to the number of basic routes.

S711 to S713 are processes in the route selecting section 113. The derived routes are scored and selected according to the mathematical formula 1 at S711. The number of generations is increased by 1 at S712. S713 is determination of the end condition. When the number of generations exceeds the upper limit number of generations, or when the value of the new derived route counter 604 is less than the lower limit number of derivations, the route searching process is ended, and the route selecting section 113 selects a recommended route from the current derived routes so as to output it at S714.

FIG. 9 is a processing flow explaining the process at S705 in detail. S901 is a process in the partial route substituting section 601, and generates the aggregate of the derived route candidates in which the probe segments are substituted for some or all of the basic routes. S902 to S905 are processes in the derived route comparing section 603 for the generated derived route candidates, and one derived route candidate is compared with the derived route recorded in the derived route DB 602 at S902. When the candidate is the new derived route which is not recorded in the derived route DB, this is recorded in the derived route DB 602 at S903, and 1 is added to the new derived route counter 604 at S904. On the other hand, when the derived route candidate is an existing derived route in the derived route DB, this derived route candidate is deleted from the derived route candidate aggregate at S905. Since the processes at S902 to S905 are executed for each derived route candidate generated at S901, when these processes are ended, only new derived routes remain in the derived route candidate aggregate, and the new derived routes form the derived route aggregate.

In the description of the route searching method, the number of initial routes generated by the initial route generating section 110 is 1, but even in the case of using a plurality of route searching methods different from the dijkstra method or using only the dijkstra method, when a searching cost is changed by giving priority to general roads or highways, a plurality of basic routes can be processed in the 0-th generation process by generating a plurality of routes and using them as initial routes.

The real time processing section 124 generates recommended routes based on information about a departure place and destination instructed by a user, according to the above route searching method.

Second Embodiment

According to the first embodiment, recommended routes in which the running history of a probe car is reflected can be generated. Only with the probe segments generated by the probe car data dividing section 107, the derived route generating section 112 can generate a derived route in which one probe segment is substituted for between the main branch nodes of the basic route like the derived route 1201 of FIG. 11. The derived route generating section 112 cannot, however, generate a derived route in which a plurality of contiguous probe segments is substituted for between the main branch nodes of the basic route.

In the second embodiment as a modification of the first embodiment, therefore, a probe segment connecting section 130 and a connection database (hereinafter, connection DB) 131 are provided to the batch processing section 123 in FIG. 1. After the process for generating probe segments in the probe car data dividing section 107, the probe segment connecting section 130 generates a new probe segment obtained by connecting two probe segments, and records it in the probe segment DB 108.

FIG. 12 is a processing flow showing the process in the probe segment connecting section 130. S1301 is an initializing process, and the connection DB 131 is cleared. The loop process is executed for each main branch node recorded in the main branch node DB 106. In the loop process, the probe segment DB 108 is searched for a probe segment whose main branch node to be processed is the starting point at S1302, and this probe segment is determined as a head probe segment. Since the head probe segment searched here is a record included in a single row in the probe segment table 303 and a plurality of the segments is present, the loop process for each head probe segment is then executed. The probe segment DB 108 is searched for a probe segment where a main branch node of the end point of the head probe segment to be processed is the starting point at S1303, and this probe segment is a rear end probe segment.

Since a plurality of rear end probe segments is present similarly to the head probe segments, the loop process is executed for each rear end probe segment. The link sequence of the head probe segment to be processed and the link sequence of the rear end probe segment are connected at both the end point of the former one and the starting point of the latter one at S1304. As a result, a new probe segment which has both the starting point of the head probe segment as its starting point and the end point of the rear end probe segment as its end point is generated so as to be recorded in the connection DB 131. The data structure of the connection DB 131 is expressed by the probe segment table 303 similarly to the probe segment DB 108. At the time when the triple loop processes for each rear end probe segment, each head probe segment and each main branch node are ended, a record of the new probe segment recorded in the connection DB 131 is added to the probe segment DB 108 at S1305, and the process in the probe segment connecting section 130 is ended.

The probe segment DB 108 including the probe segments connected by the probe segment connecting section 130 is used at the process S705 in the derived route generating section 112 similarly to the first embodiment. As a result, the derived routes including the main branch nodes not included in the basic route, like 1202 can be generated.

When the derived routes are selected as next-generation basic route at the process S711 in the route selecting section 113, the partial route chain which is divided by the main branch nodes which are not included in the initial route 1011 is obtained like the partial route chain 1203 at a next-generation process S704 in the route dividing section 111. The new derived route aggregate generated based on the partial route chain possibly includes various probe segments in comparison with the derived route aggregate generated in the first embodiment. For this reason, the solution search can be conducted for the recommended routes in a wider solution space with the running history of a probe car being reflected.

DESCRIPTIONS OF LETTERS OR NUMERALS

101: Sensor
102: Probe car data storage section
104: Probe database
105: Main branch node detecting section
106: Main branch node database
107: Probe car data dividing section
108: Probe segment database
109: Map database
110: Initial route generating section
111: Route dividing section
112: Derived route generating section

113: Route selecting section
115: Traffic information database
116: Probe car data converting section
121: In-vehicle terminal device
122: Center device
123: Batch processing section
124: Real time processing section
125: Common database section
130: Probe segment connecting section
131: Connection database
601: Partial route substituting section
602: Derived route database
603: Derived route comparing section

## Claims

**1.** A route searching system adapted to search for routes based on specified departure place and destination using probe car data including running history data of a plurality of vehicles, comprising:

a main branch node detecting section (105) which is adapted to detect main branch nodes based on the probe car data, wherein intersection nodes where a branching degree of a traffic volume exceeds a defined threshold are detected as main branch nodes;
a probe car data dividing section (107) which is adapted to divide route information of the probe car data using the main branch nodes so as to obtain probe segments;
an initial route generating section (110) which is adapted to generate an initial route for connecting the departure place and the destination based on map data;
a route dividing section (111) which is adapted to divide the route information of the initial route into a plurality of partial routes using the main branch nodes;
a derived route generating section (112) which is adapted to substitute the probe segments for at least one partial route so as to generate derived routes in which the partial routes obtained by dividing the initial route are substituted; and
a route selecting section (113) which is adapted to select at least one of the generated derived routes.

**2.** The route searching system according to claim 1, wherein
the route dividing section (111) is further adapted to divide the route information of the derived route selected by the route selecting section (113) into partial routes,
the derived route generating section (112) is adapted to substitute the probe segments for the partial routes so as to generate derived routes.

**3.** The route searching system according to claim 1 or 2, wherein
a determination condition is such that the derived route generating section (112) executes a repeating process for generating derived routes based on the derived route selected by the route selecting section (113) at predetermined number of times,
or, the derived route generating section (112) includes a derived route database (602) in which the generated derived routes are recorded,
the derived route generating section (112) is adapted to end the repeating process for generating the derived routes based on the derived route selected by the route selecting section (113) under the determination condition such that the number of new derived routes unrecorded in the derived route database (602) among the generated derived routes is less than the predetermined number, and outputs the derived route selected by the route selecting section (113) at the end point as a recommended route.

**4.** The route searching system according to claim 1, 2 or 3, further comprising:

a map database in which a length of a road link is recorded,
wherein the route selecting section (113) is adapted to give a score to the derived routes based on lengths of the derived routes obtained from the map database (109), necessary time and the number of running vehicles on the derived routes obtained from the probe car data, and selects one or a plurality of derived routes based on the determined score, wherein the given score is higher when the number of running vehicles is larger.

5. A route searching method for searching for a route based on specified departure place and destination using probe car data including running history data of a plurality of vehicles, comprising:

executing a main branch node detecting process for detecting main branch nodes based on the probe car data, wherein intersection nodes where a branching degree of a traffic volume exceeds a defined threshold are detected as main branch nodes and a probe car data dividing process for dividing route information of the probe car data using the main branch nodes so as to obtain probe segments so as to obtain the main branch nodes and the probe segments in advance;
generating an initial route for connecting the specified departure place and the destination based on map data;
executing a route dividing process for dividing the route information of the initial route into a plurality of partial routes using the main branch nodes so as to divide the initial route into partial routes;
executing a derived route generating process for substituting the probe segments for at least one partial route so as to generate derived routes, and generating derived routes in which the partial routes obtained by dividing the initial route are substituted; and
executing a route selecting process for selecting at least one of the generated derived routes so as to obtain a selected route.

6. The route searching method according to claim 5, wherein
at the route dividing process, the derived route selected at the route selecting process is used as new route information so as to divide the route information into partial routes;
at the derived route generating process, the probe segments are substituted for the partial routes so as to generate derived routes.

7. The route searching method according to claim 5 or 6, wherein
at the derived route generating process, a determination condition is such that a repeating process for generating the derived routes based on the derived route selected at the route selecting process is executed at a predetermined number of times;
or, at the derived route generating process, the generated derived routes are recorded,
at the derived route generating process, the repeating process for generating derived routes based on the derived route selected at the route selecting process is ended under the determination condition such that a number of new derived routes not included in the recorded derived routes among the generated derived routes is less than a predetermined number, and the derived route selected at the route selecting process at the end time is output as a recommended route.

8. The route searching method according to claim 5, 6 or 7, wherein
at the route selecting process a score is given to the derived routes based on lengths of the derived routes obtained from a map database (104), necessary time and the number of running vehicles on the derived routes obtained from the probe car data, and one or a plurality of derived routes is selected based on the determined score, wherein the given score is higher when the number of running vehicles is larger.

**Patentansprüche**

1. Routensuchsystem, das ausgelegt ist, Routen auf der Grundlage einer bestimmten Abfahrtsstelle und eines Ziels unter Verwendung von Sondierungsfahrzeugdaten, die Betriebsverlaufsdaten von mehreren Fahrzeugen enthalten, zu suchen, und das Folgendes umfasst:

einen Hauptzweigknotendetektionsabschnitt (105), der ausgelegt ist, Hauptzweigknoten auf der Grundlage der Sondierungsfahrzeugdaten zu detektieren, wobei Schnittpunktknoten, an denen ein Verzweigungsgrad eines Verkehrsaufkommens einen definierten Schwellenwert überschreitet, als Hauptzweigknoten detektiert werden;
einen Sondierungsfahrzeugdatenunterteilungsabschnitt (107), der ausgelegt ist, Routeninformationen des Sondierungsfahrzeugs unter Verwendung der Hauptzweigknoten zu unterteilen, um Sondierungssegmente zu erhalten;
einen Ausgangsroutenerzeugungsabschnitt (110), der ausgelegt ist, eine Ausgangsroute zum Verbinden der Abfahrtsstelle und des Ziels auf der Grundlage von Kartendaten zu erzeugen;
einen Routenunterteilungsabschnitt (111), der ausgelegt ist, die Routeninformationen der Ausgangsroute unter Verwendung der Hauptzweigknoten in mehrere Teilrouten zu unterteilen;
einen Erzeugungsabschnitt (112) für abgeleitete Routen, der ausgelegt ist, die Sondierungssegmente für mindestens eine Teilroute zu ersetzen, um abgeleitete Routen zu erzeugen, wobei die Teilrouten, die durch Unterteilen der Ausgangsroute erhalten wurden, ersetzt werden; und
einen Routenwahlabschnitt (113), der ausgelegt ist, mindestens eine der erzeugten abgeleiteten Routen zu wählen.

**2.** Routensuchsystem nach Anspruch 1, wobei
der Routenunterteilungsabschnitt (111) ferner ausgelegt ist, die Routeninformationen der abgeleiteten Route, die durch den Routenwahlabschnitt (113) gewählt wurde, in Teilrouten zu unterteilen, und
der Erzeugungsabschnitt (112) für abgeleitete Routen ausgelegt ist, die Sondierungssegmente für die Teilrouten zu ersetzen, um abgeleitete Routen zu erzeugen.

**3.** Routensuchsystem nach Anspruch 1 oder 2, wobei
eine Bestimmungsbedingung derart ist, dass der Erzeugungsabschnitt (112) für abgeleitete Routen einen sich wiederholenden Vorgang zum Erzeugen abgeleiteter Routen auf der Grundlage der abgeleiteten Route, die durch den Routenwahlabschnitt (113) gewählt wurde, eine vorgegebene Anzahl von Malen ausführt, oder
der Erzeugungsabschnitt (112) für abgeleitete Routen eine Datenbank (602) für abgeleitete Routen enthält, in der die erzeugten abgeleiteten Routen aufgezeichnet werden, und
der Erzeugungsabschnitt (112) für abgeleitete Routen ausgelegt ist, den sich wiederholenden Vorgang zum Erzeugen der abgeleiteten Routen auf der Grundlage der abgeleiteten Route, die durch den Routenwahlabschnitt (113) gewählt wurde, unter der Bestimmungsbedingung derart zu beenden, dass die Anzahl neu abgeleiteter Routen, die in der Datenbank (602) für abgeleitete Routen nicht aufgezeichnet sind, unter den erzeugten abgeleiteten Routen kleiner als die vorgegebene Anzahl ist, und die abgeleitete Route, die durch den Routenwahlabschnitt (113) gewählt wurde, am Zielpunkt als eine empfohlene Route ausgibt.

**4.** Routensuchsystem nach Anspruch 1, 2 oder 3, das ferner Folgendes umfasst:

eine Kartendatenbank, in der eine Länge einer Straßenverbindung aufgezeichnet ist, wobei
der Routenwahlabschnitt (113) ausgelegt ist, den abgeleiteten Routen auf der Grundlage von Längen der abgeleiteten Routen, die aus der Kartendatenbank (109) erhalten wurden, der erforderlichen Zeit und der Anzahl auf den abgeleiteten Routen fahrender Fahrzeuge, die aus den Sondierungsfahrzeugdaten erhalten wurden, eine Punktzahl zu geben, und eine oder mehrere abgeleitete Routen auf der Grundlage der bestimmten Punktzahl wählt, wobei die gegebene Punktzahl höher ist, wenn die Anzahl fahrender Fahrzeuge größer ist.

**5.** Routensuchverfahren zum Suchen einer Route auf der Grundlage einer bestimmten Abfahrtsstelle und eines bestimmten Ziels unter Verwendung von Sondierungsfahrzeugdaten, die Betriebsverlaufsdaten von mehreren Fahrzeugen enthalten, zu suchen, und das Folgendes umfasst:

Ausführen eines Hauptzweigknotendetektionsvorgangs zum Detektieren von Hauptzweigknoten auf der Grundlage der Sondierungsfahrzeugdaten, wobei Schnittpunktknoten, an denen ein Verzweigungsgrad eines Verkehrsaufkommens einen definierten Schwellenwert überschreitet, als Hauptzweigknoten detektiert werden, und eines Sondierungsfahrzeugdaten-Unterteilungsvorgangs zum Unterteilen von Routeninformationen des Sondierungsfahrzeugs unter Verwendung der Hauptzweigknoten, um Sondierungssegmente zu erhalten, um die Hauptzweigknoten und die Sondierungssegmente im Voraus zu erhalten;
Erzeugen einer Ausgangsroute zum Verbinden der bestimmten Abfahrtsstelle und des Ziels auf der Grundlage von Kartendaten;
Ausführen eines Routenunterteilungsvorgangs zum Unterteilen der Routeninformationen der Ausgangsroute unter Verwendung der Hauptzweigknoten in mehrere Teilrouten, um die Ausgangsroute in Teilrouten zu unterteilen;
Ausführen eines Erzeugungsvorgangs für abgeleitete Routen, um die Sondierungssegmente für mindestens eine Teilroute zu ersetzen, um abgeleitete Routen zu erzeugen, und abgeleitete Routen zu erzeugen, wobei die Teilrouten, die durch Unterteilen der Ausgangsroute erhalten wurden, ersetzt werden; und
Ausführen eines Routenwahlvorgangs, um mindestens eine der erzeugten abgeleiteten Routen zu wählen, um eine gewählte Route zu erhalten.

**6.** Routensuchverfahren nach Anspruch 5, wobei
im Routenunterteilungsvorgang die abgeleitete Route, die im Routenwahlvorgang gewählt wurde, als neue Routeninformationen verwendet werden, um die Routeninformationen in Teilrouten zu unterteilen; und
im Erzeugungsvorgang für abgeleitete Routen die Teilrouten durch die Sondierungssegmente ersetzt werden, um abgeleitete Routen zu erzeugen.

**7.** Routensuchverfahren nach Anspruch 5 oder 6, wobei
im Erzeugungsvorgang für abgeleitete Routen eine Bestimmungsbedingung derart ist, dass ein sich wiederholender Vorgang zum Erzeugen der abgeleiteten Routen auf der Grundlage der abgeleiteten Route, die durch den Routenwahlvorgang gewählt wurde, eine vorgegebene Anzahl von Malen ausgeführt wird; oder
im Erzeugungsvorgang für abgeleitete Routen die erzeugten abgeleiteten Routen aufgezeichnet werden und
im Erzeugungsvorgang für abgeleitete Routen der sich wiederholende Vorgang zum Erzeugen der abgeleiteten Routen auf der Grundlage der abgeleiteten Route, die im Routenwahlvorgang gewählte wurde, unter der Bestimmungsbedingung derart beendet wird, dass eine Anzahl neu abgeleiteter Routen, die in den aufgezeichneten abgeleiteten Routen unter den erzeugten abgeleiteten Routen kleiner als eine vorgegebene Anzahl ist, und die abgeleitete Route, die im Routenwahlvorgang gewählt wurde, zur Abschlusszeit als eine empfohlene Route ausgegeben wird.

**8.** Routensuchverfahren nach Anspruch 5, 6 oder 7, wobei
im Routenwahlvorgang den abgeleiteten Routen auf der Grundlage von Längen der abgeleiteten Routen, die aus einer Kartendatenbank (104) erhalten wurden, der erforderlichen Zeit und der Anzahl auf den abgeleiteten Routen fahrender Fahrzeuge, die aus den Sondierungsfahrzeugdaten erhalten wurden, eine Punktzahl gegeben wird und eine oder mehrere abgeleitete Routen auf der Grundlage der bestimmten Punktzahl gewählt werden, wobei die gegebene Punktzahl höher ist, wenn die Anzahl fahrender Fahrzeuge größer ist.

## Revendications

**1.** Système de recherche d'itinéraire adapté à rechercher des itinéraires sur la base d'un lieu de départ et d'une destination spécifiés en utilisant des données de voiture sonde incluant des données d'historique de circulation d'une pluralité de véhicules, comprenant :

une section de détection de noeuds de branchement principaux (105) qui est adaptée à détecter des noeuds de branchement principaux sur la base des données de voiture sonde, des noeuds d'intersection où un degré de branchement d'un volume de trafic dépasse un seuil défini étant détectés en tant que noeuds de branchement principaux ;
une section de division de données de voiture sonde (107) qui est adaptée à diviser des informations d'itinéraire des données de voiture sonde en utilisant les noeuds de branchement principaux afin d'obtenir des segments sondes ;
une section de génération d'itinéraire initial (110) qui est adaptée à générer un itinéraire initial pour relier le point de départ et la destination sur base de données cartographiques ;
une section de division d'itinéraire (111) qui est adaptée à diviser les informations d'itinéraire de l'itinéraire initial en une pluralité d'itinéraires partiels en utilisant les noeuds de branchement principaux ;
une section de génération d'itinéraire dérivé (112) qui est adaptée à substituer les segments sondes à au moins un itinéraire partiel afin de générer des itinéraires dérivés dans lesquels les itinéraires partiels obtenus en divisant l'itinéraire initial sont substitués ; et
une section de sélection d'itinéraire (113) qui est adaptée à sélectionner au moins un des itinéraires dérivés générés.

**2.** Système de recherche d'itinéraire selon la revendication 1, dans lequel
la section de division d'itinéraire (111) est en outre adaptée à diviser les informations d'itinéraire de l'itinéraire dérivé sélectionné par la section de sélection d'itinéraire (113) en itinéraires partiels,
la section de génération d'itinéraire dérivé (112) est adaptée à substituer les segments sondes aux itinéraires partiels afin de générer des itinéraires dérivés.

**3.** Système de recherche d'itinéraire selon la revendication 1 ou 2, dans lequel
une condition de détermination est telle que la section de génération d'itinéraire dérivé (112) exécute un processus répétitif pour générer des itinéraires dérivés sur la base de l'itinéraire dérivé sélectionné par la section de sélection d'itinéraire (113) un nombre prédéterminé de fois,
ou la section de génération d'itinéraire dérivé (112) inclut une base de données d'itinéraires dérivés (602) dans laquelle les itinéraires dérivés générés sont enregistrés,
la section de génération d'itinéraire dérivé (112) est adaptée à terminer le processus répétitif pour générer les itinéraires dérivés sur la base de l'itinéraire dérivé sélectionné par la section de sélection d'itinéraire (113) sous la condition de détermination que le nombre de nouveaux itinéraires dérivés non enregistrés dans la base de données d'itinéraires dérivés (602) parmi les itinéraires dérivés générés soit inférieur au nombre prédéterminé, et délivre l'itinéraire dérivé sélectionné par la section de sélection d'itinéraire (113) à l'instant final en tant qu'itinéraire recommandé.

**4.** Système de recherche d'itinéraire selon la revendication 1, 2 ou 3, comprenant en outre :

une base de données cartographiques dans laquelle une longueur d'une liaison routière est enregistrée,
dans lequel la section de sélection d'itinéraire (113) est adaptée à attribuer un score aux itinéraires dérivés sur la base des longueurs des itinéraires dérivés obtenus à partir de la base de données cartographiques (109), du temps nécessaire et du nombre de véhicules en circulation sur les itinéraires dérivés obtenus à partir des données de voiture sonde, et sélectionne un ou plusieurs itinéraires dérivés sur la base du score déterminé, le score attribué étant plus élevé lorsque le nombre de véhicules en circulation est plus grand.

**5.** Procédé de recherche d'itinéraire pour rechercher un itinéraire sur la base d'un lieu de départ et d'une destination spécifiés en utilisant des données de voiture sonde incluant des données d'historique de circulation d'une pluralité de véhicules, comprenant les étapes consistant à :

exécuter un processus de détection de noeuds de branchement principaux pour détecter des noeuds de branchement principaux sur la base des données de voiture sonde, des noeuds d'intersection où un degré de branchement d'un volume de trafic dépasse un seuil défini étant détectés en tant que noeuds de branchement principaux, et un processus de division de données de voiture sonde pour diviser des informations d'itinéraire des données de voiture sonde en utilisant les noeuds de branchement principaux afin d'obtenir des segments sondes afin d'obtenir les noeuds de branchement principaux et les segments sondes à l'avance ;
générer un itinéraire initial pour relier le lieu de départ et la destination spécifiés sur la base de données cartographiques ;
exécuter un processus de division d'itinéraire pour diviser les informations d'itinéraire de l'itinéraire initial en une pluralité d'itinéraires partiels en utilisant les noeuds de branchement principaux afin de diviser l'itinéraire initial en itinéraires partiels ;
exécuter un processus de génération d'itinéraire dérivé pour substituer les segments sondes à au moins un itinéraire partiel afin de générer des itinéraires dérivés et générer des itinéraires dérivés dans lesquels les itinéraires partiels obtenus en divisant l'itinéraire initial sont substitués ;
exécuter un processus de sélection d'itinéraire pour sélectionner au moins un des itinéraires dérivés générés afin d'obtenir un itinéraire sélectionné.

**6.** Procédé de recherche d'itinéraire selon la revendication 5, dans lequel,
lors du processus de division d'itinéraire, l'itinéraire dérivé sélectionné lors du processus de sélection d'itinéraire est utilisé comme nouvelles informations d'itinéraire afin de diviser les informations d'itinéraire en itinéraires partiels ;
lors du processus de génération d'itinéraire dérivé, les segments sondes sont substitués aux itinéraires partiels afin de générer des itinéraires dérivés.

**7.** Procédé de recherche d'itinéraire selon la revendication 5 ou 6, dans lequel,
lors du processus de génération d'itinéraire dérivé, une condition de détermination est telle qu'un processus répétitif pour générer les itinéraires dérivés sur la base de l'itinéraire dérivé sélectionné lors du processus de sélection d'itinéraire est exécuté un nombre prédéterminé de fois ;
ou, lors du processus de génération d'itinéraire dérivé, les itinéraires dérivés générés sont enregistrés,
lors du processus de génération d'itinéraire dérivé, le processus répétitif pour générer des itinéraires dérivés sur la base de l'itinéraire dérivé sélectionné lors du processus de sélection d'itinéraire est terminé sous la condition de détermination qu'un nombre de nouveaux itinéraires dérivés non inclus dans les itinéraires dérivés enregistrés parmi les itinéraires dérivés générés soit inférieur à un nombre prédéterminé et l'itinéraire dérivé sélectionné lors du processus de sélection d'itinéraire à l'instant final est délivré en tant qu'itinéraire recommandé.

**8.** Procédé de recherche d'itinéraire selon la revendication 5, 6 ou 7, dans lequel,
lors du processus de sélection d'itinéraire, un score est attribué aux itinéraires dérivés sur la base des longueurs des itinéraires dérivés obtenus à partir d'une base de données cartographiques (104), du temps nécessaire et du nombre de véhicules en circulation sur les itinéraires dérivés obtenus à partir des données de voiture sonde, et un ou plusieurs itinéraires dérivés sont sélectionnés sur la base du score déterminé, le score attribué étant plus élevé lorsque le nombre des véhicules en circulation est plus grand.

FIG. 1

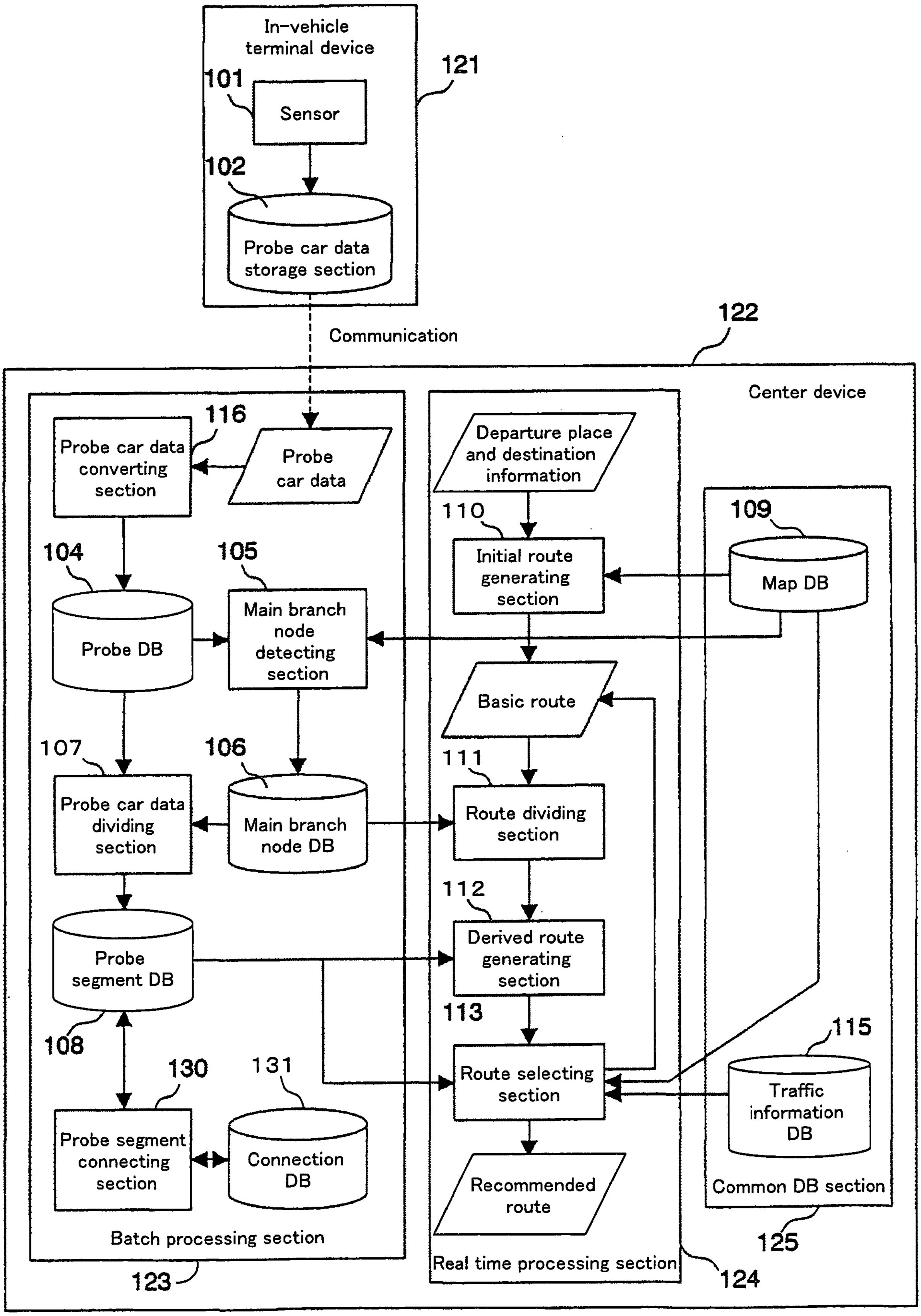
In-vehicle terminal device
121
101
Sensor
102
Probe car data storage section
Communication
122
Center device
116
Probe car data converting section
Probe car data
Departure place and destination information
110
Initial route generating section
109
Map DB
104
Probe DB
105
Main branch node detecting section
Basic route
107
106
Probe car data dividing section
Main branch node DB
111
Route dividing section
112
Probe segment DB
Derived route generating section
113
108
130
131
115
Route selecting section
Traffic information DB
Probe segment connecting section
Connection DB
Recommended route
Common DB section
Batch processing section
125
Real time processing section
123
124

FIG. 2

201

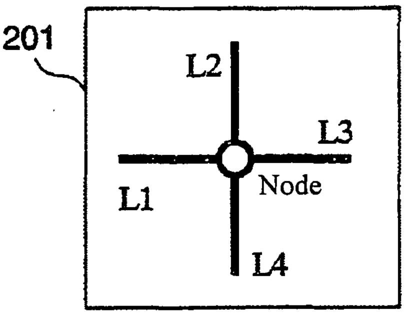


202 Branch table

| Flowing-out / Flowing-in | L1 | L2 | L3 | L4 |
|---|---|---|---|---|
| L1 | – | 2000 | 500 | 1000 |
| L2 | 300 | – | 200 | 4000 |
| L3 | 400 | 1500 | – | 1200 |
| L4 | 600 | 3500 | 300 | – |

• • • LINK L1
→Flowing-out amount into links L2, L3 and L4

Normalize by maximum value of each sequence

203 Normalization table

| Flowing-out / Flowing-in | L1 | L2 | L3 | L4 |
|---|---|---|---|---|
| L1 | – | 1 | 0.25 | 0.5 |
| L2 | 0.075 | – | 0.05 | 1 |
| L3 | 0.27 | 1 | – | 0.8 |
| L4 | 0.17 | 1 | 0.09 | – |

Sum of sequences

204 Total table

| Flowing-in link | Sum |
|---|---|
| L1 | 1.75 |
| L2 | 1.13 |
| L3 | 2.07 |
| L4 | 1.36 |
| Average | 1.58 |

A link from which a traffic volume is branched into more links has a larger value

→ Branching degree

FIG. 3

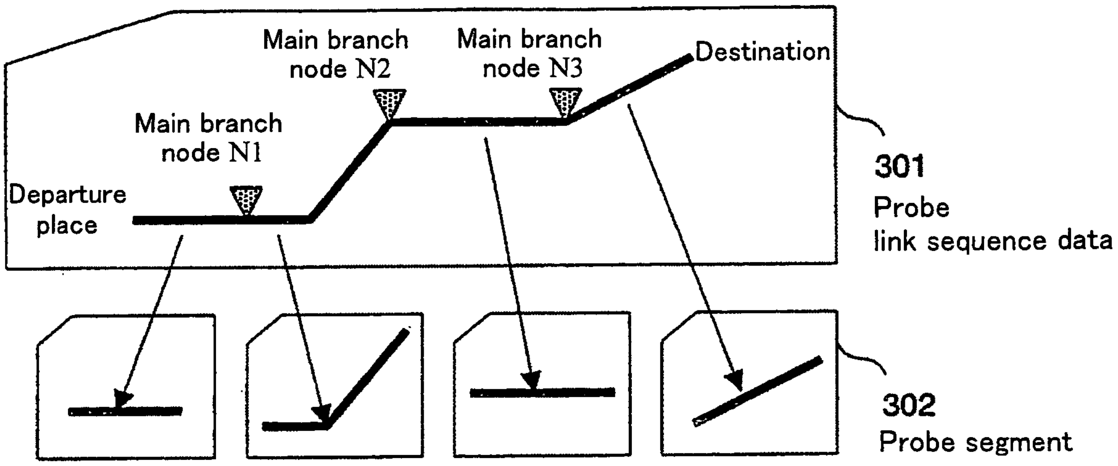


303 Probe segment table

| End point \ Starting point | A | B | C | ••• |
|---|---|---|---|---|
| A | — | Record1<br>Record2<br>••• | | |
| B | | — | | |
| C | | | — | |
| ••• | | | | — |

Record1

| The number of links | 5 |
|---|---|
| Link sequence | 20 |
| | 21 |
| | 22 |
| | 75 |
| | 78 |
| Node sequence | 105 |
| | 106 |
| | 107 |
| | 218 |
| The number of running vehicles | 500 |

Record2

| The number of links | 7 |
|---|---|
| Link sequence | 20 |
| | 150 |
| | 152 |
| | 40 |
| | 48 |
| | 75 |
| | 78 |
| Node sequence | 105 |
| | 353 |
| | 354 |
| | 355 |
| | 107 |
| | 218 |
| The number of running vehicles | 100 |

FIG. 4

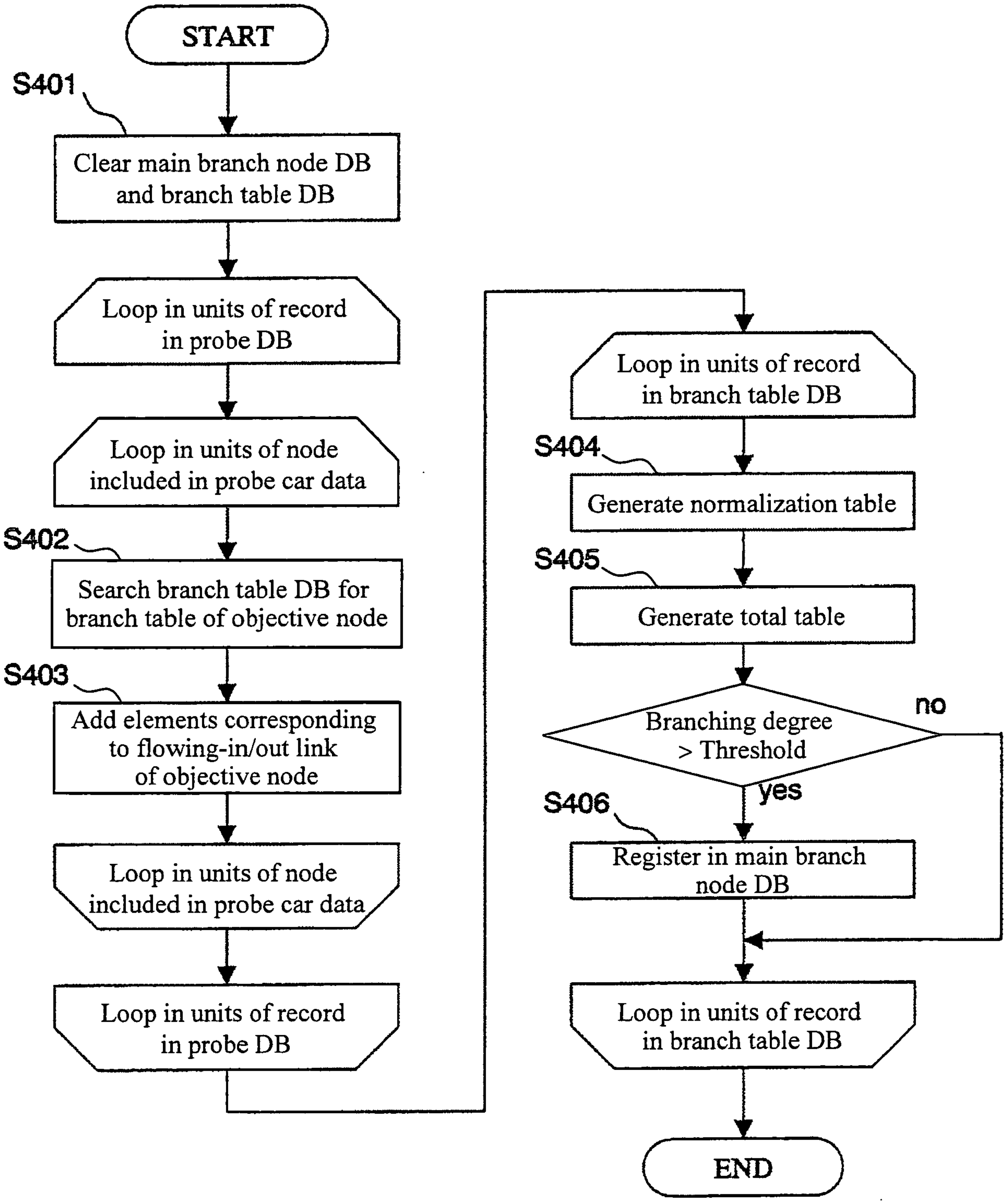
START
S401
Clear main branch node DB and branch table DB
Loop in units of record in probe DB
Loop in units of node included in probe car data
S402
Search branch table DB for branch table of objective node
S403
Add elements corresponding to flowing-in/out link of objective node
Loop in units of node included in probe car data
Loop in units of record in probe DB
Loop in units of record in branch table DB
S404
Generate normalization table
S405
Generate total table
Branching degree > Threshold
no
yes
S406
Register in main branch node DB
Loop in units of record in branch table DB
END

FIG. 5

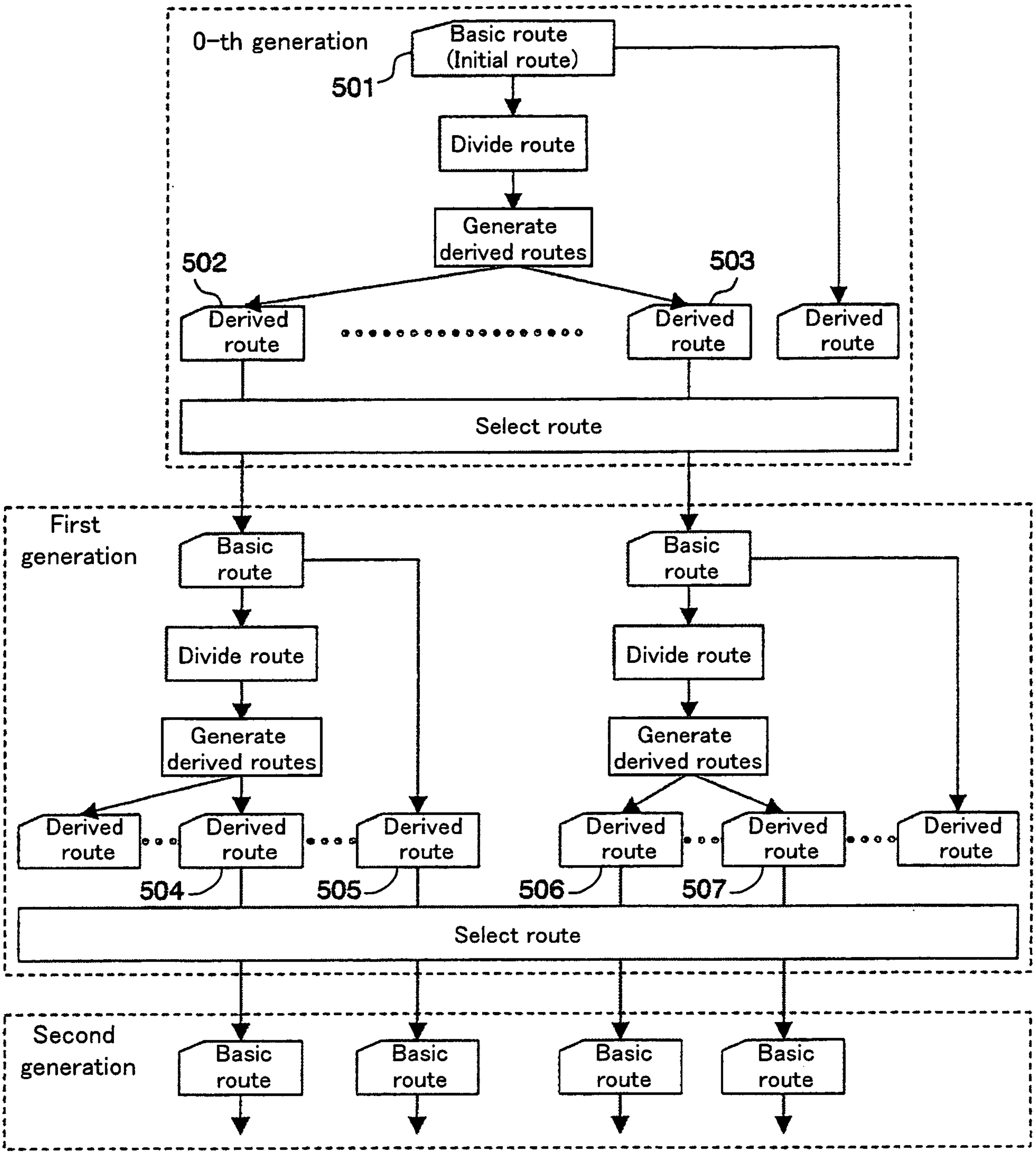

0-th generation
Basic route (Initial route)
501
Divide route
Generate derived routes
502
503
Derived route
Derived route
Derived route
Select route
First generation
Basic route
Basic route
Divide route
Divide route
Generate derived routes
Generate derived routes
Derived route
Derived route
Derived route
Derived route
Derived route
Derived route
504
505
506
507
Select route
Second generation
Basic route
Basic route
Basic route
Basic route

FIG. 6

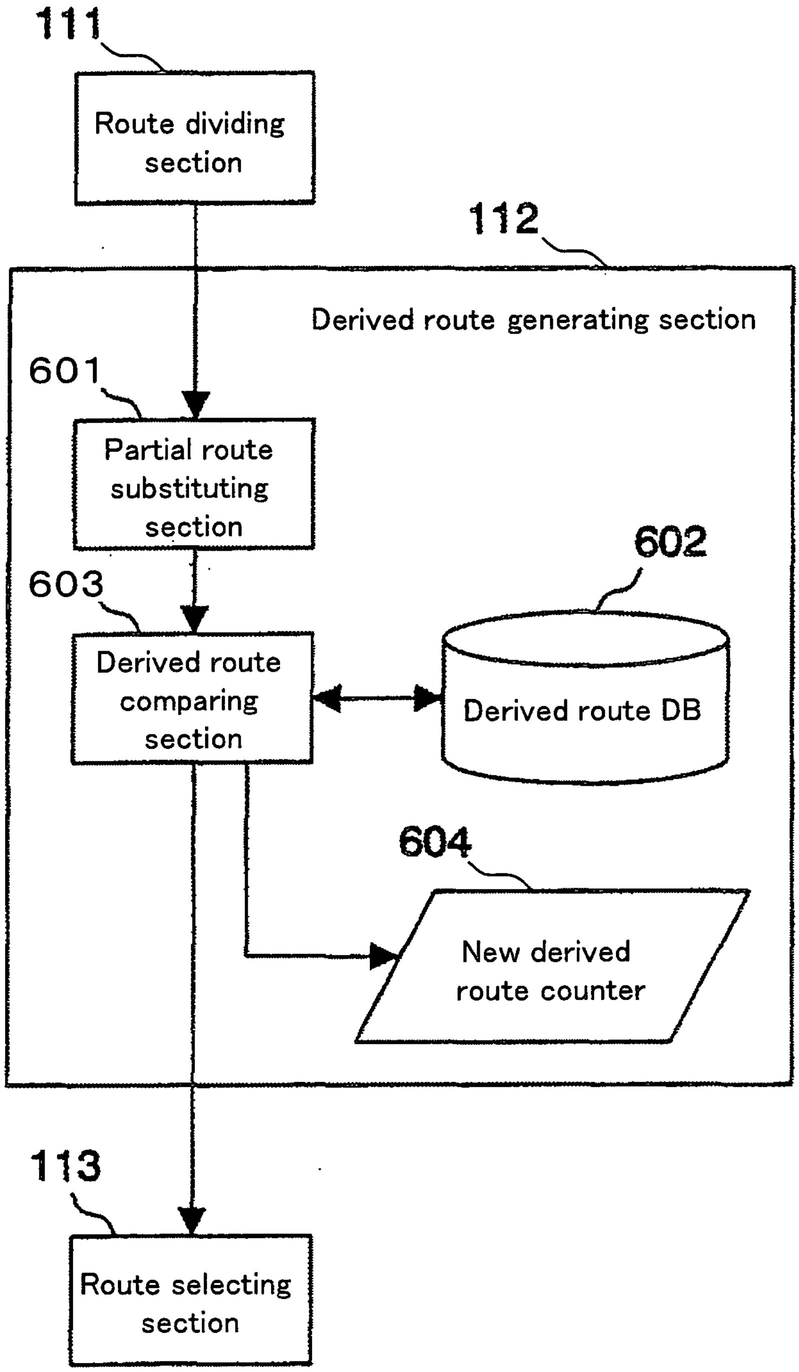
111
Route dividing section
112
Derived route generating section
601
Partial route substituting section
602
603
Derived route comparing section
Derived route DB
604
New derived route counter
113
Route selecting section

FIG. 7

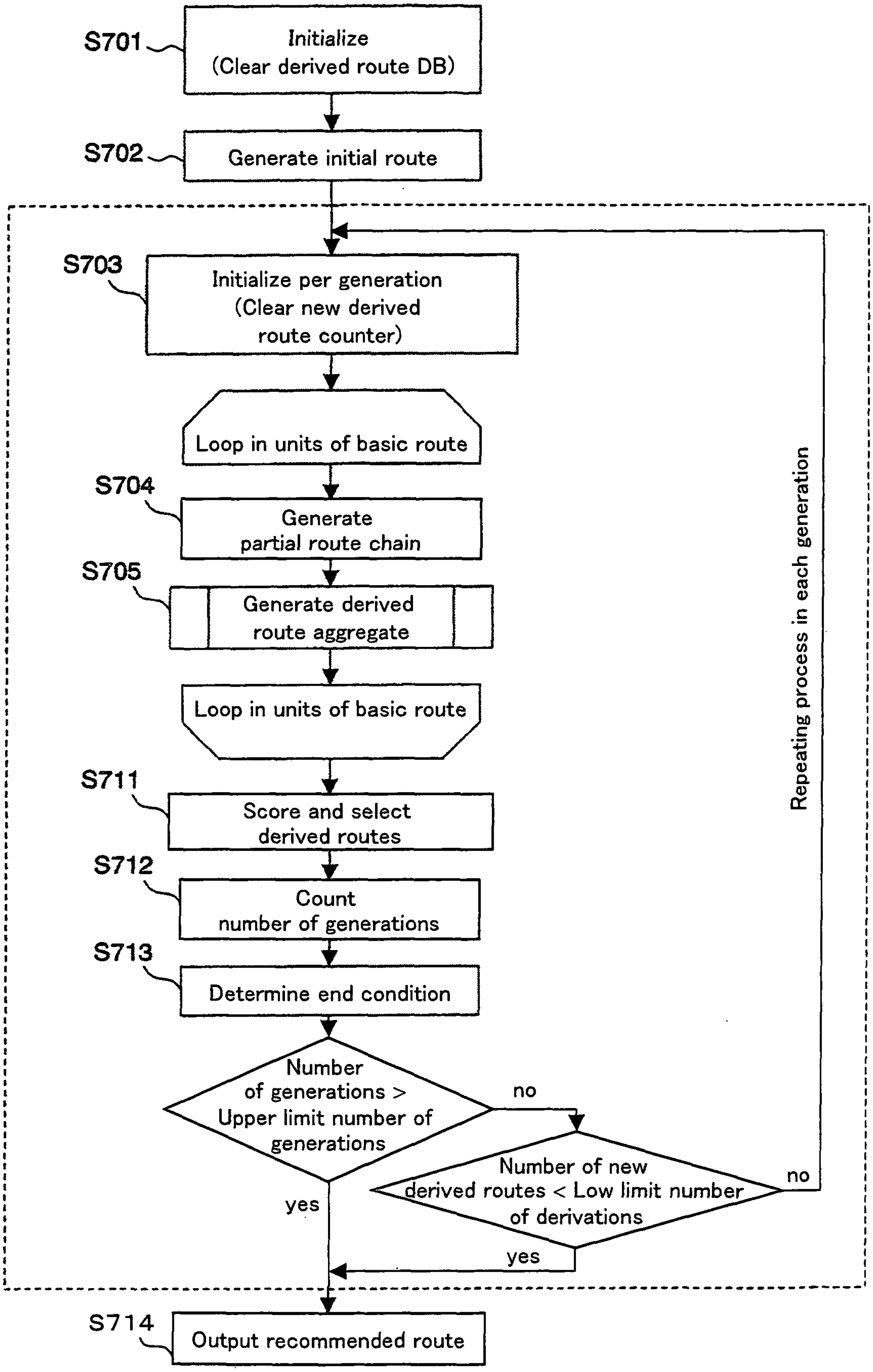
S701
Initialize
(Clear derived route DB)
S702
Generate initial route
S703
Initialize per generation
(Clear new derived
route counter)
Loop in units of basic route
S704
Generate
partial route chain
S705
Generate derived
route aggregate
Loop in units of basic route
S711
Score and select
derived routes
S712
Count
number of generations
S713
Determine end condition
Number
of generations >
Upper limit number of
generations
no
yes
Number of new
derived routes < Low limit number
of derivations
no
yes
Repeating process in each generation
S714
Output recommended route

FIG. 8

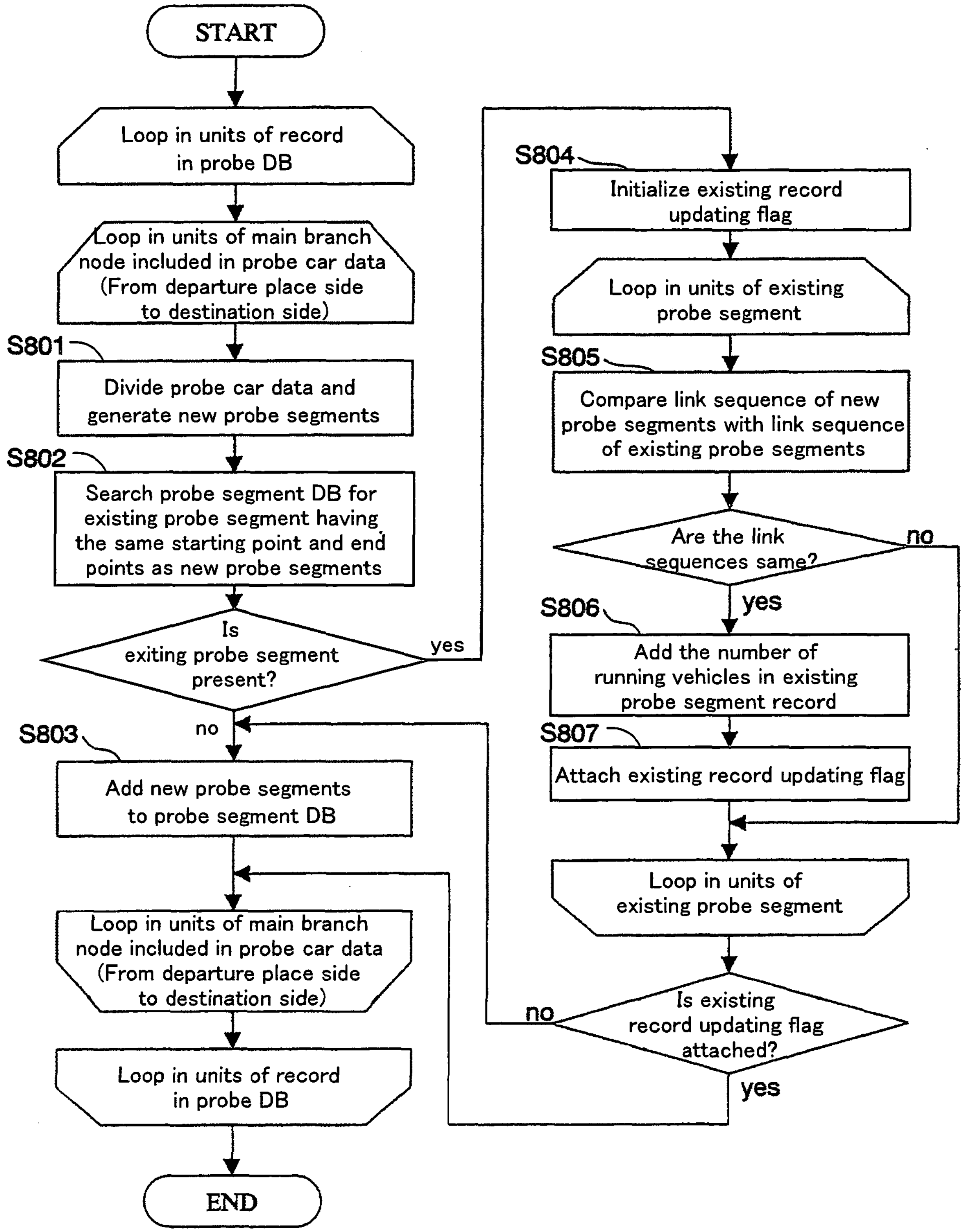
START
Loop in units of record in probe DB
Loop in units of main branch node included in probe car data (From departure place side to destination side)
S801
Divide probe car data and generate new probe segments
S802
Search probe segment DB for existing probe segment having the same starting point and end points as new probe segments
Is exiting probe segment present?
yes
no
S803
Add new probe segments to probe segment DB
Loop in units of main branch node included in probe car data (From departure place side to destination side)
Loop in units of record in probe DB
END
S804
Initialize existing record updating flag
Loop in units of existing probe segment
S805
Compare link sequence of new probe segments with link sequence of existing probe segments
Are the link sequences same?
no
yes
S806
Add the number of running vehicles in existing probe segment record
S807
Attach existing record updating flag
Loop in units of existing probe segment
Is existing record updating flag attached?
no
yes

FIG. 9

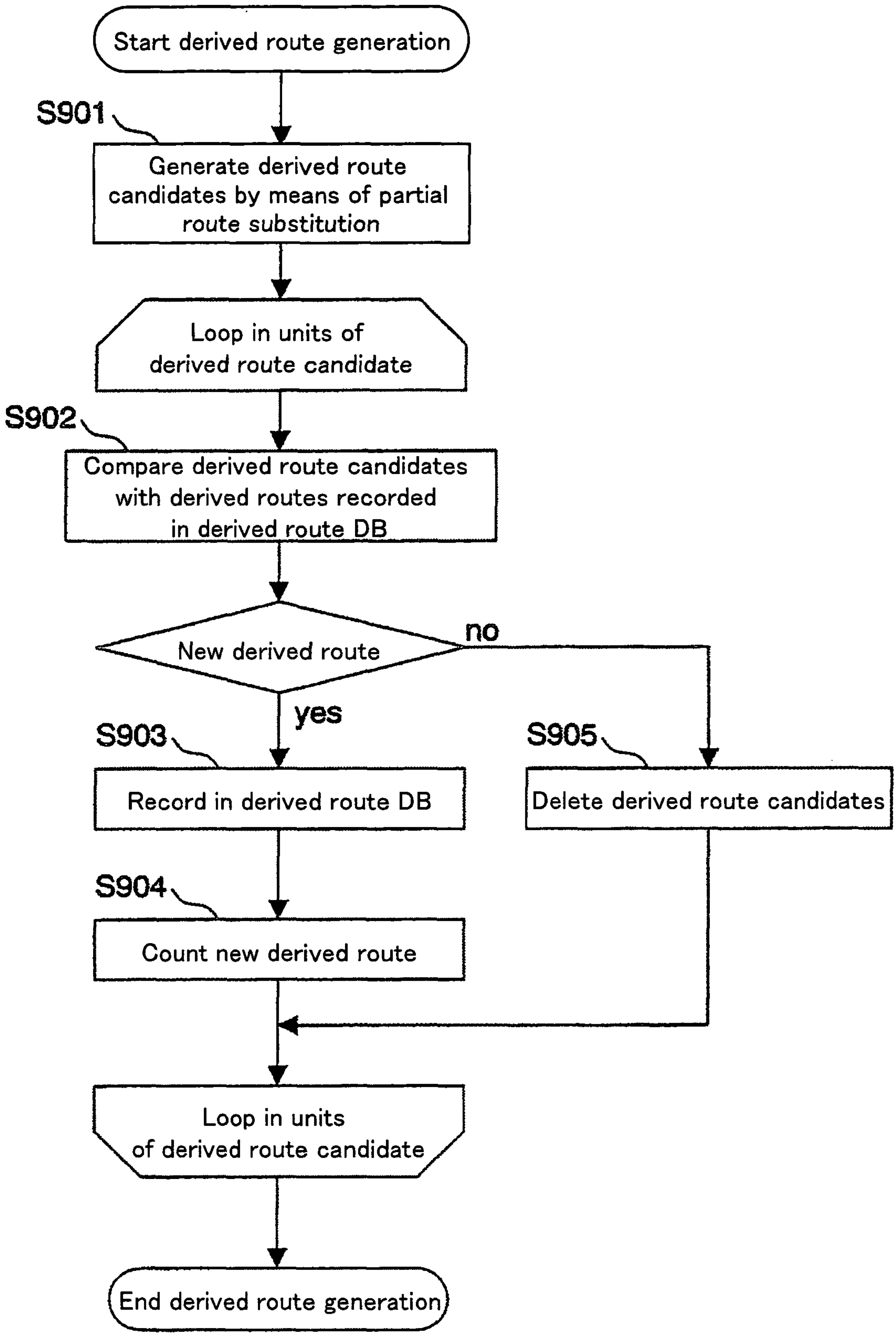
Start derived route generation
S901
Generate derived route candidates by means of partial route substitution
Loop in units of derived route candidate
S902
Compare derived route candidates with derived routes recorded in derived route DB
New derived route
no
yes
S903
Record in derived route DB
S905
Delete derived route candidates
S904
Count new derived route
Loop in units of derived route candidate
End derived route generation

FIG. 10

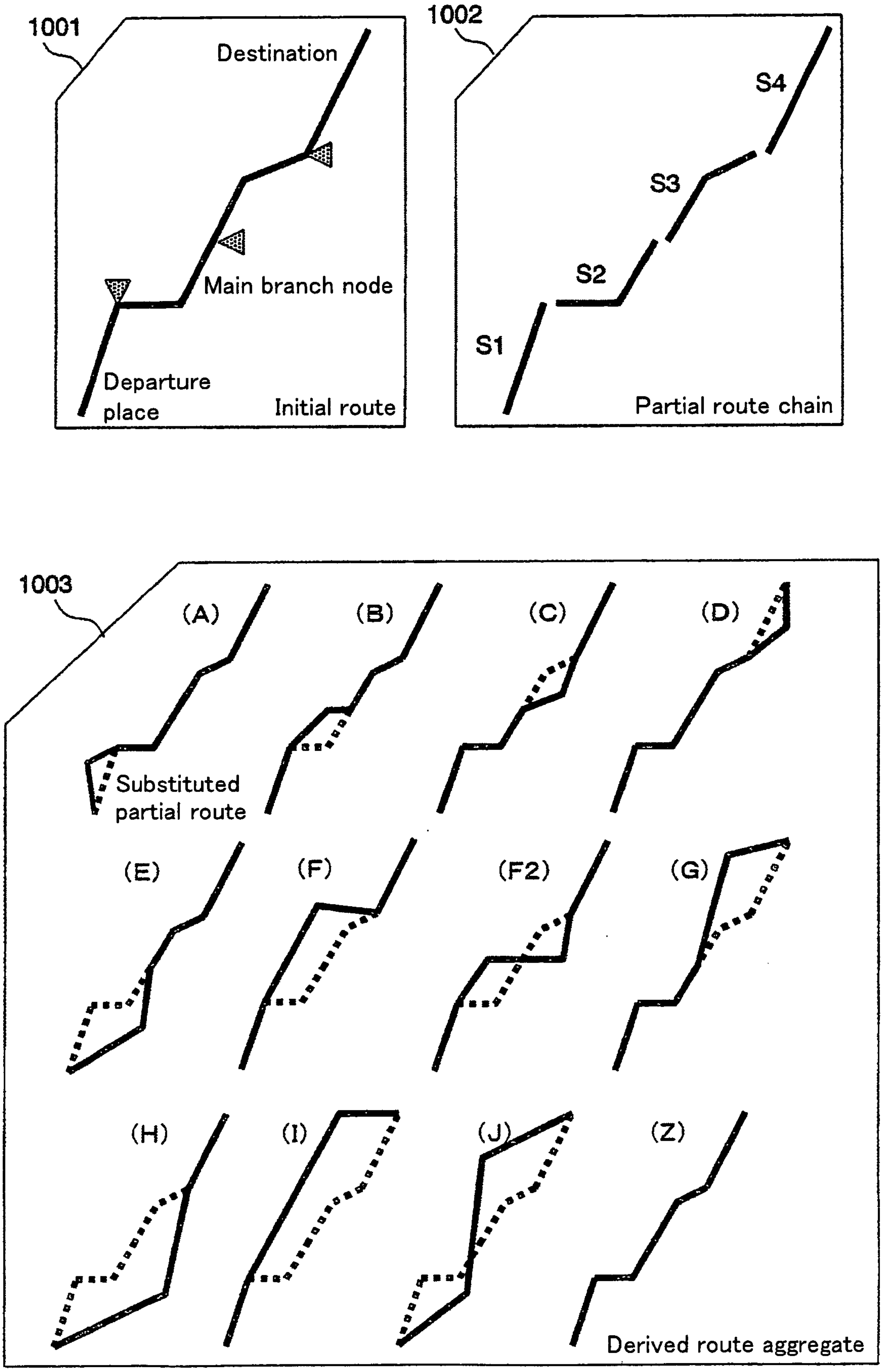
1001
Destination
Main branch node
Departure place
Initial route
1002
S4
S3
S2
S1
Partial route chain
1003
(A)
(B)
(C)
(D)
Substituted partial route
(E)
(F)
(F2)
(G)
(H)
(I)
(J)
(Z)
Derived route aggregate

FIG. 11

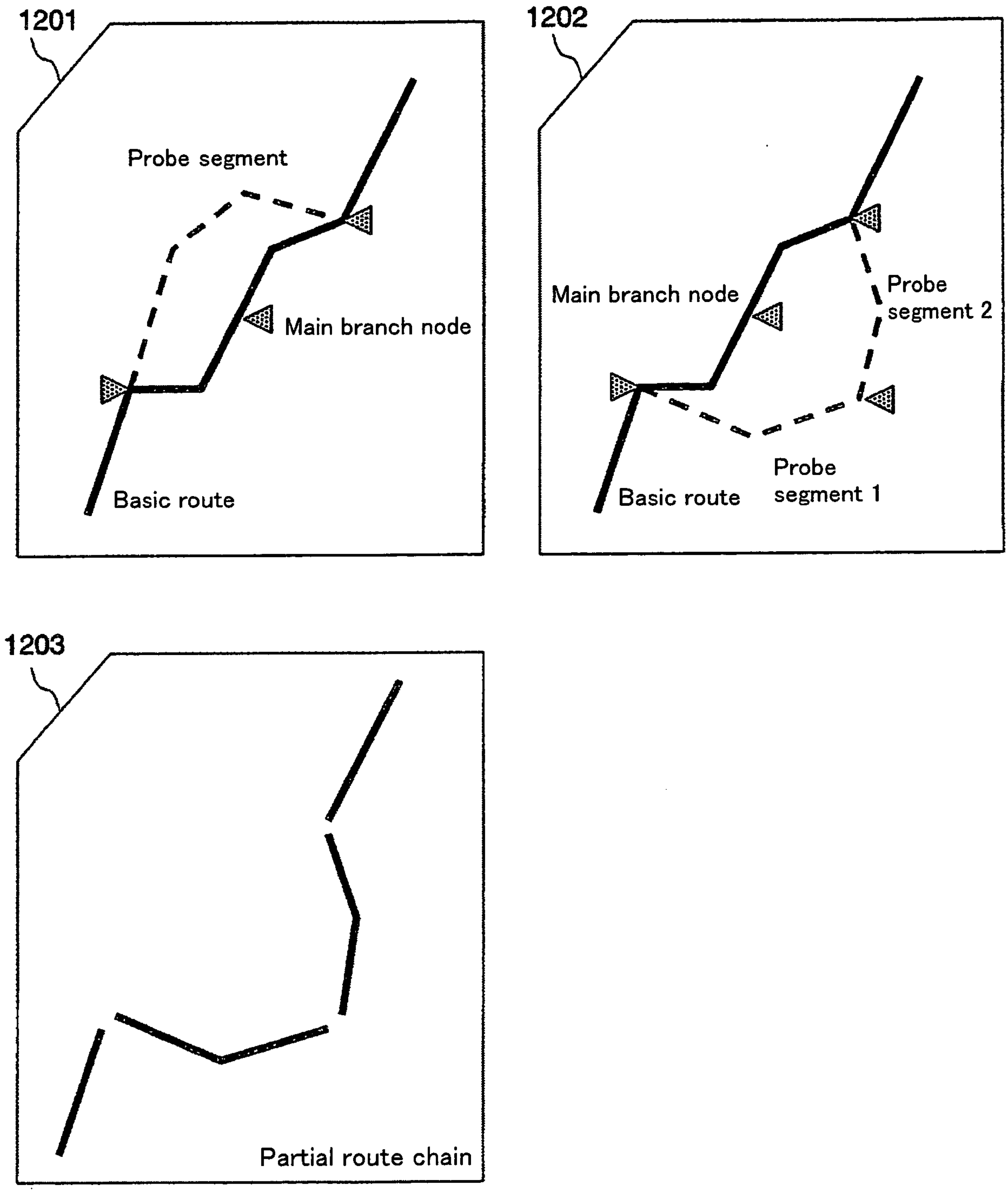
1201
Probe segment
Main branch node
Basic route
1202
Main branch node
Probe
segment 2
Probe
segment 1
Basic route
1203
Partial route chain

FIG. 12

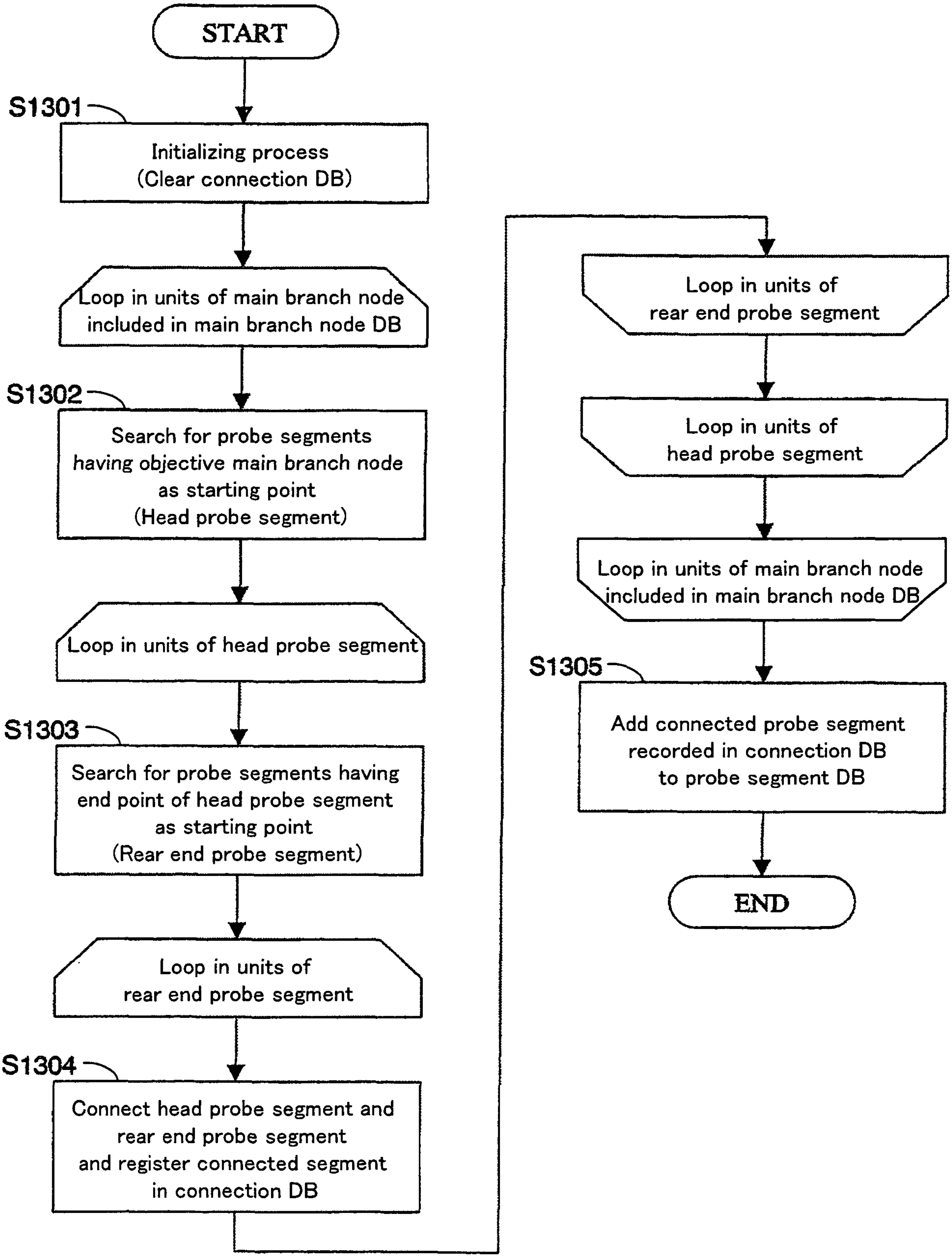
START
S1301
Initializing process
(Clear connection DB)
Loop in units of main branch node included in main branch node DB
S1302
Search for probe segments having objective main branch node as starting point
(Head probe segment)
Loop in units of head probe segment
S1303
Search for probe segments having end point of head probe segment as starting point
(Rear end probe segment)
Loop in units of rear end probe segment
S1304
Connect head probe segment and rear end probe segment and register connected segment in connection DB
Loop in units of rear end probe segment
Loop in units of head probe segment
Loop in units of main branch node included in main branch node DB
S1305
Add connected probe segment recorded in connection DB to probe segment DB
END

FIG. 13

| Derived route n | |
|---|---|
| Link sequence | Probe segment record number |
| 10 | 0 |
| 12 | 0 |
| 24 | 0 |
| 25 | 0 |
| 50 | 120 |
| 51 | 120 |
| 52 | 120 |
| 72 | 0 |
| 73 | 0 |
| 75 | 0 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004333377 A
- JP 2006300903 A
- JP 2007033057 A
- JP 10038595 B
- EP 0803705 A2